# EUROPEAN PATENT SPECIFICATION

(11) **EP 2 156 734 B1**
(45) Date of publication and mention of the grant of the patent: **25.07.2018**
(21) Application number: 09075498.7
(22) Date of filing: 29.04.1999
(51) Int. Cl.: G01H 1/00, A01J 5/007, B06B 3/00, G10K 11/00

(54) **A piezo-sensor for a milking implement**
Piezosensor für ein Melkgerät
Capteur piézoélectrique pour un dispositif de traite

(30) Priority: 01.05.1998 NL 1009052; 21.10.1998 NL 1010369
(43) Date of publication of application: 24.02.2010
(62) Divisional of application: 06076811.6
(73) Proprietor: Maasland N.V., 3147 PA Maassluis (NL)
(72) Inventor: Van den Berg, Karel, 2971 VB Bleskensgraaf (NL); Oort, Dick Marius, 3813 CL Amersfoort (NL)
(74) Representative: Octrooibureau Van der Lely N.V.

(56) References cited:
- EP-A1- 0 572 349
- EP-A1- 0 789 995
- CN-Y- 2 257 603
- US-A- 5 392 635
- DATABASE WPI Week 199128 Thomson Scientific, London, GB; AN 1991-205693 XP002724558, -& SU 1 586 626 A1 (FOMIN L U) 23 August 1990 (1990-08-23)

## Description

The invention relates to a milking implement comprising a milk line system and teat cups. According to the invention the milking implement is provided with the features of claim 1. In the case of a milking process being monitored, it is possible to provide such a sensor in one or more of the milk tubes of a teat cup. When such a sensor has been disposed in each of the teat cups or in each of the milk tubes, it is possible to obtain per udder quarter information regarding the course of the milking Process, (see e.g. SU 1 586 626 A1). For example, there can be checked per teat cup whether it is leaking air, i.e. has not properly been connected or has been kicked off unexpectedly. Additionally it is possible to obtain an indication as to in what stage the milking process is at a given moment. For example, the foremilking, main milking and stripping stage can clearly be distinguished from each other.

Using a strongly absorbing material prevents ambient sound from affecting and/or disturbing the measurement. For the purpose of obtaining a proper measurement, the piezo-sensor can be disposed relatively closely to a wall of the housing. In this manner the sound and/or the vibrations to be measured are transmitted as optimally as possible to the piezo-sensor. It will be obvious that besides silicones an other suitable material may be applied as well. According to again another embodiment, the piezo-sensor comprises a guide element extending as far as near a wall of the housing or extending through said wall. The guide element enables to embed the piezo-sensor in the absorbing material at a greater distance from the wall, without deteriorating a proper transmission of the sound and/or the vibrations to the piezo-sensor. In an embodiment, the guide element is designed as a recording needle that is connected to the piezoelectric transducer.

According to another inventive feature, the piezo-sensor is disposed in a chamber or closable cavity in the housing. In a preferred embodiment of the invention, said chamber or closable cavity is dimensioned in such a manner that it also comprises an air chamber. The presence of such an air chamber simplifies the vibration of the piezoelectric sensor, thus enabling an optimal measurement. According to again another aspect of the invention, the piezo-sensor bears on a liquid or viscous layer, such as vaseline or gel, for example, having a relatively good conductivity for vibrations and/or sound. Because of the fact that the layer is liquid or viscous, the housing and the piezoelectric sensor perfectly fit, unevennesses both in the wall of the housing and in a wall of the sensor being perfectly filled by the layer. When the sensor is designed so as to have a closable cavity, according to an inventive feature the sensor comprises a closing element, such as a cap, for example, by means of which the cavity can be insulated from ambient sound. In a preferred embodiment, the closing element as well as the housing are made of a strongly absorbing material. In order to realize a proper transmission of the sound and/or the vibrations to the piezo-sensor, according to an embodiment, the closing element is designed as a pressure cap. In accordance with a further embodiment, the pressure cap comprises a pressure portion acting on an other part of the sensor than the measuring element thereof.

Besides the fact that the above-mentioned sensor can be fastened to a part to be measured, such as a bearing housing, for example, e.g. by clamping the housing thereto, according to the invention the housing is provided with a duct through which a liquid and/or a gas can flow. In this manner it is possible to carry out acoustical measurements in the liquid and/or gas flow through the housing. In order to minimize the influence of the ambient sound on the measurement and/or to enable a proper measurement at a relatively low rate of flow of the liquid and/or the gas, according to an inventive feature, it is advantageous that in or near the duct there is provided a flow disturbing element affecting the liquid and/or gas flow in at least part of the duct. Because of the fact that the liquid and/or the gas is caused to whirl by said flow disturbing element, a better measurement can be obtained. Besides the flow disturbing element being constituted by an additional element, the positioning of the sensor, e.g. closely to a bend in a line system, may also produce such a disturbing effect.

In a preferred embodiment of the invention, the flow disturbing element comprises a sensor for a further measurement, such as a temperature or conductivity sensor, for example.

The invention also relates to a method according to claim 10 of acoustically monitoring the course of a process, in which method the amplitude difference and/or the intensity value of sound are/is measured during the process, and the amplitudes and/or the intensity values of the sound and/or the vibrations are measured continuously or with an adjustable frequency by means of a sound and/or vibration sensor, such as a piezoelectric transducer, during the entire process or part of the process and are compared mutually and/or with a predetermined threshold value and/or reference value and/or reference pattern for the purpose of drawing, on the basis thereof, conclusions in relation to the progress and/or the course of the process and/or the presence of disturbances and/or deviations in the course of the process. It has appeared that by means of a piezoelectric transducer, utilized in this case as a microphone, it is possible to establish in a very simple manner whether the process is carried out satisfactorily. The above-described method is a milking process, and in part of the milk line system and/or in a teat cup (1), by means of the piezoelectric transducer (12) the amplitude and/or the intensity value are/is measured of the sound that is produced by the air flow in the teat cup (1) and/or in the milk line system when said teat cup (1) is not connected and a milk vacuum has been applied in the milk line system, which amplitude and/or intensity value are/is recorded as a reference value and/or reference pattern for the purpose of deducing therefrom whether or not a teat cup (1) has been correctly connected to a teat.

According to an inventive feature, the threshold value is adjusted depending on what process has been started up and/or depending on the stage of the process. It has appeared that the above-mentioned method can in particular be applied very well when monitoring a milking process by measuring by means of the piezoelectric transducer, in part of the milk line system or in a teat cup, the amplitude and/or the intensity value of the sound that is produced by the air flow in the teat cup and/or in the milk line system when said teat cup is not connected and a milk vacuum has been applied in the milk line system, which amplitude and/or intensity value are/is recorded as a reference value and/or reference pattern for the purpose of deducing therefrom whether or not a teat cup has been correctly connected to a teat. According to again another embodiment, it is possible to check the piezoelectric transducer by comparing said reference value and/or reference pattern after some time with newly obtained values and/or patterns. Furthermore it is possible to determine, on the basis of this threshold value, whether a teat cup is disconnected abruptly from a teat or has not been connected quite properly to the teat, as in the first case during the abrupt disconnection there is immediately obtained a high amplitude and/or intensity value which is approximately comparable to the threshold value, whereas in the second case there can indeed be observed an increase in amplitude which, however, is not as high as the threshold value.

According to a further aspect it is possible to adapt the aforementioned reference value and/or reference pattern and/or threshold value to the milking cycle itself, i.e. to choose an other value or an other pattern for foremilking, main milking and stripping, or to adapt the above-mentioned values and/or patterns per animal or per group of animals. In this manner it is possible to obtain a highly accurate measurement and consequently a highly accurate monitoring specifically per teat or per animal or per group of animals. The aforementioned method and sensor are particularly suitable for a milking implement that is provided with a milking robot for automatically connecting teat cups to an animal to be milked, because with such a milking robot a supervising operator is not always present. Therefore, it is possible to monitor the milking process acoustically by means of the above-mentioned method and sensor without the presence of an operator.

The invention will now be explained in further detail with reference to the accompanying drawings in which:
Figure 1 shows a teat cup with part of a milk line system in which the sensor according to the invention is included;
Figure 2 is a cross-section of the sensor according to Figure 1, and
Figure 3 is a plan view according to the arrows III - III in Figure 2.

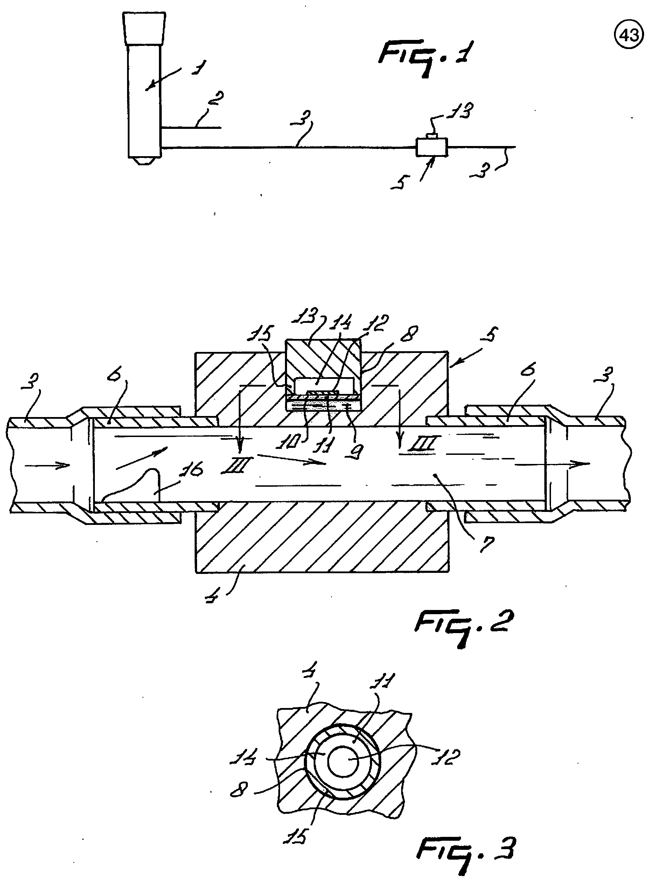

Figure 1 shows a teat cup 1 that is provided with a pulse tube 2 and a milk tube 3. In the milk tube 3 there is included a sensor 4 for measuring amplitude difference and/or intensity value of sound. The teat cup 1 may constitute part of an automatic milking implement comprising a milking robot for automatically connecting teat cups to the teats of an animal to be milked.

Figure 2 is a cross-section of the sensor 4 according to Figure 1. The sensor 4 comprises a housing 5 which is made of a material having a strongly absorbing capacity for sound and/or vibrations. On both sides of the housing 5 there are disposed two nipples 6 to which the milk tube 3 is connected. In the housing 5 there is further disposed a duct 7 through which the milk and/or cleaning liquid and/or air can flow. As shown in Figures 2 and 3, in the housing 5 there is further provided a cylindrical cavity 8 extending as far as near the duct 7. A liquid or viscous layer 9 having a good conductivity for sound and/or vibrations is disposed in the lower side of the cylindrical housing 8. This layer 9 may consist e.g. of vaseline. On the layer 9 there is provided a piezo-sensor 10 comprising a round brass plate 11 and a piezoelectric transducer 12 disposed thereon. In this case the piezoelectric transducer 12 is constituted by a crystal. The cylindrical cavity 8 is further closed by means of a closing element 13, which, in the present embodiment, is designed as a pressure cap. Near its lower side the pressure cap 13 is provided with a recess 14 having such dimensions that the piezoelectric transducer 12 is disposed in an air chamber. As shown in Figures 2 and 3, near its lower side the closing cap 13 comprises a ring-shaped pressure portion 15 by means of which the round brass plate 11 can be pressed on the layer 9, in such a manner that there is a good contact between the layer 9 and the round brass plate 11.

In one of the nipples 6 there is further disposed a flow disturbing element 16 by means of which the laminar flow across at least part of the duct 7 is caused to whirl. In the present embodiment the flow disturbing element 16 comprises a (non-shown) temperature and/or conductivity sensor.

## Claims

1. A milking implement comprising a milk line system and teat cups (1), wherein a teat cup (1) is provided with a pulse tube (2) and a milk tube (3), wherein the milking implement is provided with a sensor (4) for measuring the amplitude difference and/or the intensity value of sound, said sensor being provided with a piezo-sensor (10), such as a piezoelectric transducer (12), wherein the sensor (4) is included in the milk tube (3), **characterized in that** the sensor (4) comprises a housing (5) which is made of a material having a strongly absorbing capacity for sound and/or vibrations, such as silicones, for example, while at least one piezoelectric sensor (10) is embedded in said housing (5), wherein the housing (5) is provided with at least one duct (7) through which milk and/or cleaning liquid and/or air can flow.

2. A milking implement as claimed in claim 1, **characterized in that** said milking implement is provided with a milking robot for automatically connecting teat cups to an animal to be milked.

3. A milking implement as claimed in claim 1 or 2, **characterized in that** in or near the duct (7) there is provided a flow disturbing element (16) affecting the milk and/or cleaning liquid and/or air flow in at least part of the duct (7).

4. A milking implement as claimed in claim 3, **characterized in that** the flow disturbing element (16) comprises a sensor, such as a temperature or conductivity sensor, for example.

5. A milking implement as claimed in any one of the preceding claims, **characterized in that** the piezo-sensor (10) is disposed relatively closely to a wall of the housing (5).

6. A milking implement as claimed in any one of the preceding claims, **characterized in that** the piezo-sensor (10) is disposed in a chamber or closable cavity (8) in the housing (5).

7. A milking implement as claimed in claim 6, **characterized in that** the chamber or closable cavity (8) is dimensioned in such a manner that it also comprises an air chamber (14).

8. A milking implement as claimed in any one of the preceding claims, **characterized in that** the piezo-sensor (10) bears on a liquid or viscous layer (9), such as vaseline or gel, for example, having a relatively good conductivity for vibrations and/or sound.

9. A milking implement as claimed in any one of claims 6-8, **characterized in that** the closable cavity (8) can be closed by means of a closing element (13), such as a cap, for example.

10. A method of acoustically monitoring the course of a milking process using a milking implement as claimed in one of the preceding claims, in which method the amplitude difference and/or the intensity value of sound are/is measured during the process, and the amplitudes and/or the intensity values of the sound and/or the vibrations are measured continuously or with an adjustable frequency by means of the sound and/or vibration sensor (4), such as a piezoelectric transducer (12), during the entire process or part of the process and are compared mutually and/or with a predetermined threshold value and/or reference value and/or reference pattern for the purpose of drawing, on the basis thereof, conclusions in relation to the progress and/or the course of the process and/or the presence of disturbances and/or deviations in the course of the process, wherein in part of the milk line system and/or in a teat cup (1), by means of the piezoelectric transducer (12) the amplitude and/or the intensity value are/is measured of the sound that is produced by the air flow in the teat cup (1) and/or in the milk line system when said teat cup (1) is not connected and a milk vacuum has been applied in the milk line system, which amplitude and/or intensity value are/is recorded as a reference value and/or reference pattern for the purpose of deducing therefrom whether or not a teat cup (1) has been correctly connected to a teat.

11. A method as claimed in claim 10, **characterized in that** the threshold value is adjusted depending on what process has been started up and/or depending on the stage of the process.

## Patentansprüche

1. Melkvorrichtung, umfassend ein Milchleitungssystem und Melkbecher (1),
wobei ein Melkbecher (1) mit einem Impulsrohr (2) und einem Milchrohr (3) versehen ist,
wobei die Melkvorrichtung mit einem Sensor (4) versehen ist, um die Amplitudendifferenz und/oder den Intensitätsgeräuschwert zu messen, und dieser Sensor mit einem Piezosensor (10) ausgestattet ist, wie etwa mit einem piezoelektrischen Messumformer (12),
wobei der Sensor (4) in dem Milchrohr (3) enthalten ist, **dadurch gekennzeichnet, dass** der Sensor (4) ein Gehäuse (5) umfasst, das aus einem Material besteht, das eine Ton und/oder Schwingungen stark absorbierende Eigenschaft aufweist, wie etwa beispielsweise Silikone, während wenigstens ein piezoelektrischer Sensor (10) in dem Gehäuse (5) eingebettet ist,
wobei das Gehäuse (5) mit wenigstens einem Kanal (7) ausgestattet ist, durch den Milch und/oder Reinigungsflüssigkeit und/oder Luft strömen kann.

2. Melkvorrichtung nach Anspruch 1, **dadurch gekennzeichnet, dass** die Melkvorrichtung mit einem Melkroboter zur automatischen Verbindung der Melkbecher mit einem zu melkenden Tier versehen ist.

3. Melkvorrichtung nach Anspruch 1 oder 2, **dadurch gekennzeichnet, dass** im oder in der Nähe des Kanals (7) ein Flussstörungselement (16) vorgesehen ist, das den Fluss der Milch und/oder Reinigungsflüssigkeit und/oder Luft wenigstens in einem Teil des Kanals beeinflusst (7).

4. Melkvorrichtung nach Anspruch 3, **dadurch gekennzeichnet, dass** das Flussstörungselement (16) einen Sensor umfasst, wie etwa beispielsweise einen Temperatur- oder Leitfähigkeitssensor.

5. Melkvorrichtung nach einem der vorhergehenden Ansprüche, **dadurch gekennzeichnet, dass** der Piezosensor (10) relativ nahe an einer Wand des Gehäuses (5) angeordnet ist.

6. Melkvorrichtung nach einem der vorhergehenden Ansprüche, **dadurch gekennzeichnet, dass** der Piezosensor (10) in einer Kammer oder einem schließbaren Hohlraum (8) in dem Gehäuse (5) angeordnet ist.

7. Melkvorrichtung nach Anspruch 6, **dadurch gekennzeichnet, dass** die Kammer oder der schließbare Hohlraum (8) solche Abmessungen aufweist, dass er/sie auch eine Luftkammer (14) umfasst.

8. Melkvorrichtung nach einem der vorhergehenden Ansprüche, **dadurch gekennzeichnet, dass** der Piezosensor (10) auf einer Flüssigkeits- oder viskosen Lage (9) aufliegt, wie etwa beispielsweise auf Vaseline oder Gel, die eine relativ gute Leitfähigkeit für Schwingungen und/oder Ton aufweist.

9. Melkvorrichtung nach einem der Ansprüche 6 bis 8, **dadurch gekennzeichnet, dass** der schließbare Hohlraum (8) durch ein Verschlusselement (13), wie etwa beispielsweise einen Deckel, geschlossen werden kann.

10. Verfahren zur akustischen Überwachung des Melkverlaufs mit einer Melkvorrichtung nach einem der vorhergehenden Ansprüche, bei welchem Verfahren die Amplitudendifferenz und/oder der Intensitätswert des Tons während des Verfahrens gemessen wird/werden und die Amplituden und/oder Intensitätswerte des Tons und/oder der Schwingungen ständig oder mit einer einstellbaren Frequenz durch den Ton- und/oder Schwingungssensor (4), wie etwa durch einen piezoelektrischen Messumformer (12), während des gesamten Ablaufs oder eines Teils des Ablaufs gemessen und miteinander und/oder mit einem vorgegebenen Grenzwert und/oder Referenzwert und/oder Referenzmuster vergleichen werden, um auf dieser Grundlage Schlüsse bezüglich der Fortschritts und/oder Verlaufs des Ablaufs und/oder des Vorhandenseins von Störungen und/oder Abweichungen im Verlauf des Ablaufs zu ziehen, wobei in einem Teil des Milchleitungssystems und/oder in einem Melkbecher (1) durch den piezoelektrischen Messumformer (12) die Amplitude und/oder der Intensitätswert des Tons, der durch den Luftfluss in dem Melkbecher (1) und/oder in dem Milchleitungssystem erzeugt wird, wenn der Melkbecher (1) nicht verbunden ist, und ein Milchvakuum auf das Milchleitungssystem gelegt wurde, gemessen werden/wird, wobei diese Amplitude und/oder der Intensitätswert als Referenzwert und/oder Referenzmuster aufgezeichnet werden/wird, um daraus zu schließen, ob ein Melkbecher (1) korrekt an einer Zitze angeschlossen wurde oder nicht.

11. Verfahren nach Anspruch 10, **dadurch gekennzeichnet, dass** der Grenzwert angepasst wird, je nachdem, welcher Ablauf gestartet wurde und/oder abhängig von der Stufe des Ablaufs.

## Revendications

1. Dispositif de traite comprenant un système de lignes à lait et des gobelets trayeurs (1), un gobelet trayeur (1) étant pourvu d'un tuyau de pulsation (2) et d'un tuyau à lait (3),
le dispositif de traite étant pourvu d'un capteur (4) destiné à mesurer la différence d'amplitude et/ou la valeur d'intensité du son, ledit capteur étant pourvu d'un capteur piézoélectrique (10), tel qu'un transducteur piézoélectrique (12), le capteur (4) étant incorporé dans le tuyau à lait (3), **caractérisé en ce que** le capteur (4) comprend un boîtier (5) qui est constitué d'un matériau ayant une capacité de forte absorption du son et/ou des vibrations, tel que les silicones, par exemple, tandis qu'au moins un capteur piézoélectrique (10) est incorporé dans ledit boîtier (5),
le boîtier (5) étant pourvu d'au moins une conduite (7) par laquelle du lait et/ou un liquide de nettoyage et/ou de l'air peuvent s'écouler.

2. Dispositif de traite selon la revendication 1, **caractérisé en ce que** ledit dispositif de traite est pourvu d'un robot de traite destiné à raccorder automatiquement des gobelets trayeurs à un animal à traire.

3. Dispositif de traite selon la revendication 1 ou 2, **caractérisé en ce qu'**il est prévu, dans ou près de la conduite (7), un élément perturbant l'écoulement (16) affectant l'écoulement de lait et/ou de liquide de nettoyage et/ou d'air dans au moins une partie de la conduite (7).

4. Dispositif de traite selon la revendication 3, **caractérisé en ce que** l'élément perturbant l'écoulement (16) comprend un capteur, tel qu'un capteur de température ou de conductivité, par exemple.

5. Dispositif de traite selon l'une quelconque des revendications précédentes, **caractérisé en ce que** le capteur piézoélectrique (10) est disposé relativement près d'une paroi du boîtier (5).

6. Dispositif de traite selon l'une quelconque des revendications précédentes, **caractérisé en ce que** le capteur piézoélectrique (10) est disposé dans une chambre ou cavité fermable (8) dans le boîtier (5).

7. Dispositif de traite selon la revendication 6, **caractérisé en ce que** la chambre ou cavité fermable (8) est dimensionnée de telle sorte qu'elle comprend également une chambre à air (14).

8. Dispositif de traite selon l'une quelconque des revendications précédentes, **caractérisé en ce que** le capteur piézoélectrique (10) repose sur une couche liquide ou visqueuse (9) telle que de la vaseline ou du gel, par exemple, ayant une conductivité relativement bonne pour les vibrations et/ou le son.

9. Dispositif de traite selon l'une quelconque des revendications 6 à 8, **caractérisé en ce que** la cavité fermable (8) peut être fermée au moyen d'un élément de fermeture (13), tel qu'un bouchon, par exemple.

10. Procédé de surveillance acoustique du déroulement d'un processus de traite utilisant un dispositif de traite selon une des revendications précédentes, procédé dans lequel la différence d'amplitude et/ou la valeur d'intensité du son sont/est mesurée(s) pendant le processus, et les amplitudes et/ou les valeurs d'intensité du son et/ou des vibrations sont mesurées en continu ou avec une fréquence réglable au moyen du capteur de son et/ou de vibrations (4), tel qu'un transducteur piézoélectrique (12), pendant le processus entier ou une partie du processus, et sont comparées mutuellement et/ou avec une valeur seuil et/ou une valeur de référence et/ou un motif de référence prédéterminés dans le but de tirer, sur la base de ceux-ci, des conclusions relatives à la progression et/ou au déroulement du processus et/ou à la présence de perturbations et/ou d'écarts dans le déroulement du processus, dans lequel, dans une partie du système de lignes à lait et/ou dans un gobelet trayeur (1), au moyen du transducteur piézoélectrique (12), l'amplitude et/ou la valeur d'intensité sont/est mesurée(s) pour le son qui est produit par l'écoulement d'air dans le gobelet trayeur (1) et/ou dans le système de lignes à lait quand ledit gobelet trayeur (1) n'est pas raccordé et un vide de lait a été appliqué dans le système de lignes à lait, laquelle amplitude et/ou laquelle valeur d'intensité sont/est enregistrée(s) en tant que valeur de référence et/ou motif de référence dans le but d'en déduire si un gobelet trayeur (1) a été correctement raccordé ou non à un trayon.

11. Procédé selon la revendication 10, **caractérisé en ce que** la valeur seuil est réglée en fonction du processus qui a été démarré et/ou en fonction du stade du processus.
